# EUROPÄISCHE PATENTSCHRIFT

(11) **EP 4 229 726 B1**
(45) Veröffentlichungstag und Bekanntmachung des Hinweises auf die Patenterteilung: **31.12.2025**
(21) Anmeldenummer: 21789674.5
(22) Anmeldetag: 07.10.2021
(51) Int. Cl.: H01T 13/54

(54) **VORKAMMER-ZÜNDKERZE UND BRENNRAUM MIT VORKAMMER-ZÜNDKERZE**
PRECHAMBER SPARK PLUG AND COMBUSTION CHAMBER HAVING A PRECHAMBER SPARK PLUG
BOUGIE D'ALLUMAGE DE PRÉCHAMBRE ET CHAMBRE DE COMBUSTION DOTÉE D'UNE BOUGIE D'ALLUMAGE DE PRÉCHAMBRE

(30) Priorität: 14.10.2020 DE 102020212974
(43) Veröffentlichungstag der Anmeldung: 23.08.2023
(73) Patentinhaber: Robert Bosch GmbH, 70442 Stuttgart (DE)
(72) Erfinder: KASKE, Stephan, 75447 Sternenfels Diefenbach (DE); BLANKMEISTER, Matthias, 42579 Heiligenhaus (DE); WENK, Moritz, 70469 Stuttgart (DE)
(86) Internationale Anmeldenummer: PCT/EP2021/077648
(87) Internationale Veröffentlichungsnummer: WO 2022/078858

(56) Entgegenhaltungen:
- EP-A1- 3 370 314
- EP-A1- 3 591 775
- WO-A1-2021/144076

## Beschreibung

### Stand der Technik

Die vorliegende Erfindung geht aus von einer Vorkammer-Zündkerze gemäß dem Oberbegriff des Anspruch 1, wie sie grundsätzlich beispielsweise aus der DE102017221517 A1, EP 3 592 775 A1 oder der EP 3 370 324 A1 bereits bekannt ist.

### Offenbarung der Erfindung

Der vorliegenden Erfindung liegt die Erkenntnis zugrunde, dass die Kappe einer derartigen Vorkammer-Zündkerze bei dem bestimmungsgemäßen Gebrauch in einem Brennraum intensiv mit den Kraftstoff-Luft-Gemischen und deren Strömungen wechselwirkt. Insbesondere wurde erkannt, dass eine Rückwirkung der Außengeometrie der Kappe auf die innermotorische Verbrennung erfolgt bzw. dass eine innermotorische Verbrennung beim Einsatz von Vorkammer-Zündkerzen durch die Gestaltung der Außengeometrie der Kappe optimierbar ist.

Ein diesbezüglicher Wirkzusammenhang kann darin begründet sein, dass die Gestaltung der Kappe darauf zielt, das Einströmen von Gasen durch die Bohrung/Bohrungen in die Vorkammer und/oder das Ausströmen von Gasen durch die Bohrung/Bohrungen aus der Vorkammer zu erleichtern. Hieraus resultierend kann eine Zündung eines Luft-Kraftstoffgemischs in der Vorkammer und nachfolgend auch im Brennraum durch die aus der Vorkammer austretenden Zündstrahlen mit Hinblick auf Dynamik und Wirkungsgrad verbessert werden.

Die Erfindung schlägt daher gemäß einer ersten Konzeption vor, dass die Kappe der Zündkerze eine Außengeometrie ohne Drehsymmetrie aufweist. Es gibt also keine Drehachse und kein N aus {2, 3, 4 usw.} sodass die Kappe einschließlich der in sie eingebrachten Bohrung/Bohrungen bei einer Drehung um diese Achse um 360°/N in sich selbst übergeht.

Durch diese Brechung sämtlicher Drehsymmetrien erschließen sich die Freiheitsgrade, um die Außengeometrie der Kappe mit Hinblick auf die dynamischen Strömungsverhältnisse im Brennraum, die ja in aller Regel auch nicht drehsymmetrisch sind, zu optimieren.

Die Erfindung schlägt ferner gemäß einer zweiten Konzeption neuartige Strukturelemente vor, durch deren Anordnung auf der Außenseite der Kappe die geschilderten Vorteile erreichbar sind.

Diese Strukturelemente sind insbesondere Strömungsgeber (engl.: "Spoiler") im Bereich der Bohrungen. Der Bereich der Bohrungen kann im Rahmen dieser Erfindung als der Bereich aufgefasst werden, der durch einen Umkreis um die Bohrungen mit einem Umkreisradius gegeben ist, dessen Umkreisradius gleich dem vierfachen Radius der Mündung der Bohrung auf der Außenfläche der Kappe ist. In Weiterbildungen kann der Bereich sogar noch kleiner gewählt werden, beispielsweise durch den dreifachen oder doppelten Radius der Mündung der Bohrung auf der Außenfläche der Kappe.

Die Strukturelemente sind folgende Strukturelemente bzw.

Strömungsgeber oder zusammenwirkende Kombinationen dieser Strukturelemente bzw. Strömungsgeber: Prallflächen, Abrisskanten, konkave Bereiche, konvexe Bereiche.

Prallflächen können sich dadurch auszeichnen, dass sie im Bereich einer Bohrung angeordnet sind und unter einem Winkel relativ zu der Bohrungsachse angeordnet sind, die kleiner als 90° sind, insbesondere sogar kleiner als 75° sind.

Prallflächen können an eine Bohrung unmittelbar angrenzen.

Vor dem Hintergrund eines Brennraums, in dem, beispielsweise in einem Kompressionstakt, im Bereich der Kappe eine Strömungsrichtung vorherrscht, kann die Prallfläche stromabwärts der Bohrung angeordnet sein, sodass sie einen Staudruck generiert, der die Strömung in die Bohrung hinein umlenkt.

Abrisskanten können scharfe Kanten sein, beispielsweise mit einem Kantenradius von weniger als 150µm, insbesondere sogar weniger als 100µm. Abrisskanten können Prallflächen und/oder konkave Bereiche begrenzen, insbesondere auf deren von der ggf. zugehörigen Bohrung abgewandten Seite.

Konvexe Bereiche und konkave Bereiche können sich dadurch auszeichnen, dass ihr Flächenkrümmungsradius nicht größer ist als der doppelte Radius der Mündung der Bohrung auf der Außenfläche der Kappe.

Konvexe Bereiche und konkave Bereiche können an eine Bohrung unmittelbar angrenzen.

Vor dem Hintergrund eines Brennraums, in dem, beispielsweise in einem Kompressionstakt, im Bereich der Kappe eine Strömungsrichtung vorherrscht, können konkave Bereiche stromabwärts der Bohrung angeordnet sein, sodass sie einen Staudruck generieren, der die Strömung in die Bohrung hinein umlenkt.

Vor dem Hintergrund eines Brennraums, in dem, beispielsweise in einem Kompressionstakt, im Bereich der Kappe eine Strömungsrichtung vorherrscht, können konvexe Bereiche stromaufwärts der Bohrung angeordnet sein. Der sich im Windschatten der konvexen Bereiche ausbildende Unterdruck kann ebenfalls eine Strömungsumlenkung in die Bohrung hinein begünstigen.

### Zeichnungen

- Figur 1: zeigt eine schematische Schnittansicht einer an sich bekannten Vorkammerzündkerze.
- Figur 2: eine schematische Ansicht eines Querschnitts durch eine Kappe einer erfindungsgemäße Vorkammer-Zündkerze in einem Brennraum.

### Bevorzugte Ausführungsformen der Erfindung

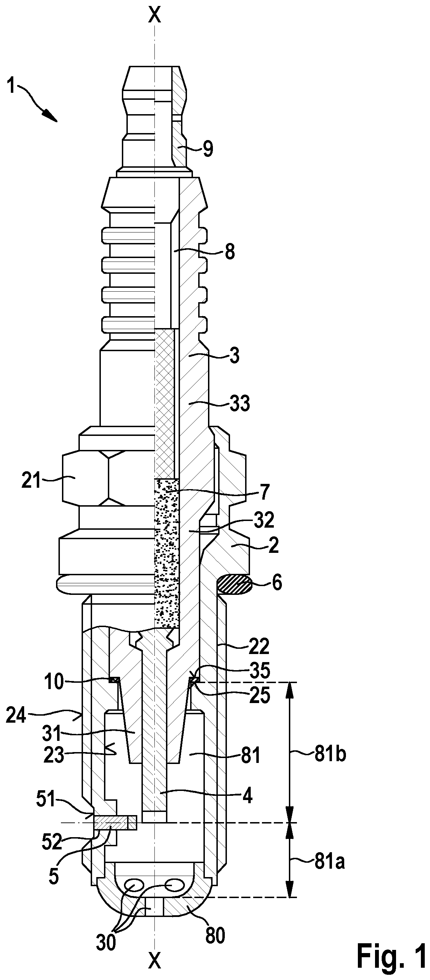

Figur 1 zeigt eine an sich bekannte Vorkammer-Zündkerze 1, von der die Erfindung beispielsweise ausgeht. Sie umfasst ein Gehäuse 2. In das Gehäuse 2 ist ein Isolator 3 eingesetzt. Das Gehäuse 2 hat eine Außenseite 24 und eine Innenseite 23. Die Längsachse des Gehäuses 2, die Längsachse X des Isolators 3 und die Längsachse der Zündkerze 1 fallen zusammen. In den Isolator 3 ist eine Mittelelektrode 4 eingesetzt. Des Weiteren erstreckt sich in den Isolator 3 eine elektrische Kontaktierung, über diese wird die Zündkerze 1 mit einer Spannungsquelle elektrisch kontaktiert. Die elektrische Kontaktierung bildet das Brennraum-abgewandte Ende der Zündkerze 1. Die elektrische Kontaktierung ist beispielsweise durch einen Anschlussbolzen 8 und eine Anschlussmutter 9, ausgebildet.

Der Isolator 3 wird typischerweise in drei Bereich unterteilt: Isolatorfuß 31, Isolatorkörper 32 und Isolatorkopf 33. Die drei Bereiche unterscheiden sich beispielsweise durch unterschiedliche Durchmesser. Der Isolatorfuß 31 ist das Brennraum-zugewandte Ende des Isolators 3. Innerhalb des Isolatorfußes 31 ist die Mittelelektrode 4 angeordnet. Der Isolatorfuß 31 ist in der Regel vollständig innerhalb des Gehäuses 2 angeordnet. In der Regel hat der Isolatorfuß 31 den kleinsten Außendurchmesser am Isolator 3.

Angrenzend an den Isolatorfuß 31 ist der Isolatorkörper 32 angeordnet, der in diesem Beispiel vom Gehäuse 2 umfasst ist. Der Isolatorkörper 32 hat einen größeren Außendurchmesser als der Isolatorfuß 31. Der Übergang zwischen Isolatorfuß 31 und Isolatorkörper 32 ist als Schulter, Kehle oder Freiformfläche ausgebildet. Dieser Übergang wird auch als Fußkehle oder Isolatorsitz 35 bezeichnet.

Der Isolatorkopf 33 grenzt am Brennraum-abgewandten Ende des Isolatorkörpers 32 an diesem an und bildet das Brennraum-abgewandte Ende des Isolators 3. Der Isolatorkopf 33 ragt aus dem Gehäuse 2 heraus. Der Außendurchmesser des Isolatorkopfs 33 liegt zwischen den Außendurchmessern von Isolatorfuß 31 und Isolatorkörper 32, wobei die Bereiche typischerweise über ihre Länge keinen konstanten Außendurchmesser haben, sondern der Außendurchmesser variieren kann.

Das Gehäuse 2 weist an seiner Innenseite einen Sitz 25 auf. Der Isolator liegt mit seiner Schulter bzw. Isolatorsitz 35 auf dem Gehäuse-Sitz 25 auf. Zwischen dem Isolatorsitz 35 und dem Gehäuse-Sitz 25 ist eine Innendichtung 10 angeordnet.

Zwischen der Mittelelektrode 4 und dem Anschlussbolzen 8 befindet sich im Isolator 3 ein Widerstandselement 7, auch Panat genannt. Das Widerstandselement 7 verbindet die Mittelelektrode 4 elektrisch leitend mit dem Anschlussbolzen 8. Das Widerstandselement 7 ist beispielsweise als Schichtsystem aus einem ersten Kontaktpanat, einem Widerstandspanat und einem zweiten Kontaktpanat aufgebaut. Die Schichten des Widerstandselements unterscheiden sich durch ihre Materialzusammensetzung und dem daraus resultierenden elektrischen Widerstand. Das erste Kontaktpanat und das zweite Kontaktpanat können einen unterschiedlichen oder einen gleichen elektrischen Widerstand aufweisen.

An der Innenseite 23 des Gehäuses 2 ist die Masseelektrode 5 in einer Durchgangsbohrung 52 angeordnet, so dass die Masseelektrode 5 radial von der Gehäuse-Innenseite 23 in die Durchgangsbohrung 52 entlang der Längsachse X des Gehäuses 2 hineinragt. Die Masseelektrode 5 und die Mittelelektrode 4 bilden zusammen einen Zündspalt aus. Die Durchgangsbohrung 52 erstreckt sich von der Außenseite 24 durch die Gehäusewand bis zur Innenseite 23 des Gehäuses 2.

Das Gehäuse 2 weist einen Schaft auf. An diesem Schaft sind ein Mehrkant 21, ein Schrumpfeinstich und ein Gewinde 22 ausgebildet. Das Gewinde 22 dient zum Einschrauben der Zündkerze 1 in eine Brennkraftmaschine. Zwischen dem Gewinde 22 und dem Mehrkant 21 ist ein äußeres Dichtelement 6 angeordnet. Das äußere Dichtelement 6 ist in diesem Ausführungsbeispiel als Faltdichtung ausgestaltet.

Die Durchgangsbohrung 52 in der Gehäusewand ist im Bereich des Gewindes 22 ausgebildet. Dabei kann die Durchgangsbohrung 52 für die Masseelektrode 5 und damit auch die Masseelektrode 5 auf jeder beliebigen Höhe im Bereich des Gewindes 22 angeordnet sein. Je nach der Position der Masseelektrode 5 im Bereich des Gewindes 22 ragt entsprechend die Mittelelektrode 4 und mit ihr auch der Isolatorfuß 31 mehr oder weniger weit in die Vorkammer 81 hinein. Je nach gewünschten Verwendungszweck der Vorkammer-Zündkerze kann die Position der Bohrung im Bereich des Gewindes 22 und der Masseelektrode 5 auf der Innenseite 23 des Gehäuses 2 gewählt werden.

Die Durchgangsbohrung 52 ist in einer Vertiefung 51, wie beispielsweise eine konische oder eine runde Nut, angeordnet. Dabei ist der Außendurchmesser des Gehäuses 2 in der Vertiefung kleiner als der Kerndurchmesser des Gewindes 22.

Die Vertiefung 51 kann beispielsweise durch ein Stanzen des Gehäuses 2 bei der Herstellung der Vorkammer-Zündkerze 1 entstehen. Dabei wird nicht nur der Außendurchmesser des Gehäuses 2 im Bereich der Vertiefung 51 reduziert, sondern auch der Innendurchmesser des Gehäuses 2 im Bereich der Vertiefung 51.

Am Gehäuse 2 ist auf dessen brennraumseitigen Stirnfläche eine Kappe 80 angeordnet. Das Gehäuse 2 und die Kappe 80 bilden zusammen eine Vorkammer 81 mit einem Vorkammervolumen. Die Vorkammer 81 erstreckt sich von der Kappe bis ins Gehäuse 2 hinein und innerhalb des Gehäuses 2 bis zum Gehäuse-Sitz 25, dem der Isolator 3 mit seiner Schulter 35 aufliegt. Der Zwischenraum zwischen Gehäuse 2 und Isolator 3 ist an dieser Stelle mittels einer Innendichtung 10 gasdicht abgedichtet. Die Vorkammer 81 und ihr Volumen lassen sich in eine vordere Vorkammer 81a und eine hintere Vorkammer 81b unterteilen. Der Grenze zwischen der vorderen Vorkammer 81a und hinteren Vorkammer 81b wird durch die Position der Masseelektrode bestimmt, d.h. die vordere Vorkammer 81a erstreckt sich von der Kappe bis zu einer Ebene, die auf Höhe der Masseelektrode senkrecht zur der Längsachse X des Gehäuses verläuft. Entsprechend erstreckt sich die hintere Vorkammer 81b von dieser Ebene bis zum Gehäuse-Sitz 25, auf dem der Isolator 3 und die Innendichtung 10 aufliegen.

In der Kappe 80 sind mehrere Bohrungen vorgesehen, die als Durchgangslöcher ausgebildet. Von ihnen ist eine auf der Längsachse X-X der Vorkammerzündkerze 1 angeordnet und die weiteren sind unter Drehwinkeln von 72° um die Achse X-X zueinander angeordnet. Die vorbekannte Kappe 80 weist also eine fünfzählige Drehsymmetrie auf.

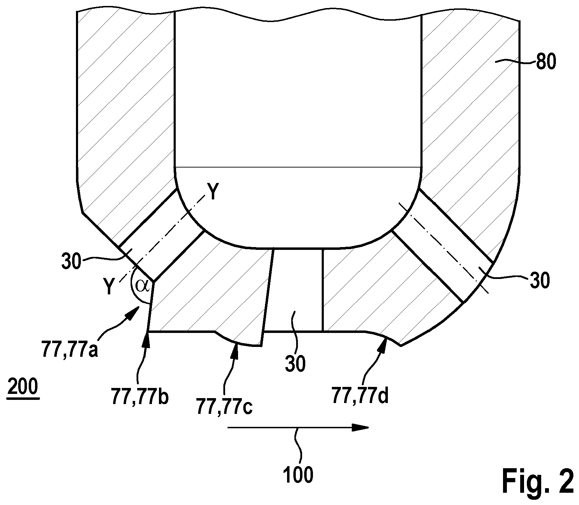

Figur 2 zeigt eine schematische Ansicht eines Querschnitts durch eine erfindungsgemäße Vorkammer-Zündkerze 1 in einem Brennraum 200, in dem die Vorkammer-Zündkerze 1 montiert ist. Zur besseren Übersichtlichkeit ist in der Figur 2 lediglich die im Vergleich zur Figur 1 erfindungsgemäß modifizierte Kappe 80 dargestellt, sowie der Pfeil 100, der in die Richtung einer Strömung weist, die in dem Brennraum 200, beispielsweise während eines Kompressionstakts, vorherrscht, nämlich in der Figur 2 von links nach rechts.

Die erfindungsgemäß modifizierte Kappe 80 weist Strukturelemente 77 auf, die die Drehsymmetrie der in der Figur 1 gezeigten Kappe 80 brechen.

Bei den Strukturelementen 77 handelt es sich erstens um eine Prallfläche 77a, die an eine Bohrung 30 unmittelbar angrenzt und stromabwärts der Bohrung 30 angeordnet ist, zweitens um eine Abrisskante 77b, die die als scharfe Kante mit einem Kantenradius von weniger als 50µm ausgebildet ist und die die Prallfläche 77a auf der von der Bohrung 30 abgewandte Seite der Prallfläche 77a begrenzt, drittens um einen konvexen Bereich 77c, dessen Flächenkrümmungsradius nicht größer ist als der doppelte Radius der Mündung der Bohrung 30 auf der Außenfläche der Kappe 80 und der an die Bohrung 30 unmittelbar angrenzt und stromaufwärts der Bohrung 30 angeordnet ist, und viertens um einen konkaven Bereich 77d, dessen Flächenkrümmungsradius nicht größer ist als der doppelte Radius der Mündung der Bohrung 30 auf der Außenfläche der Kappe 80 und der an die Bohrung 30 unmittelbar angrenzt und stromabwärts der Bohrung 30 angeordnet ist.

## Patentansprüche

1. Vorkammer-Zündkerze (1), mit einem Gehäuse (2) und mit einer Kappe (80), die am brennraumseitigen Ende des Gehäuses (2) angeordnet ist, die zusammen mit dem Gehäuse (2) eine Vorkammer (81) ausbildet und mindestens eine Bohrung (30) aufweist, mit einem innerhalb des Gehäuses (2) angeordneten Isolator (3), einer innerhalb des Isolators (3) angeordneten Mittelelektrode (4) und mit einer Masseelektrode (5), wobei die Masseelektrode (5) und die Mittelelektrode (4) zusammen einen Zündspalt ausbilden, **dadurch gekennzeichnet, dass** die Außengeometrie der Kappe (80) mindestens ein Strukturelement (77) aufweist, das das Einströmen von Gasen durch die Bohrung (30) in die Vorkammer (81) und/oder das Ausströmen von Gasen durch die Bohrung (30) aus der Vorkammer (81) erleichtert, wobei das Strukturelement (77) eines der folgenden Strukturelemente oder zusammenwirkende Kombinationen dieser Strukturelemente ist: eine Prallfläche (77a), eine Abrisskante (77b) und/oder ein konvexer Bereich (77c).

2. Vorkammer-Zündkerze nach Anspruch 1, **dadurch gekennzeichnet, dass** das Strukturelement (77) zusätzlich einen konkaven Bereich (77d) aufweist.

3. Vorkammer-Zündkerze nach einem der Ansprüche 1 bis 2, **dadurch gekennzeichnet, dass** das Strukturelement (77) eine Prallfläche (77a) ist, die im Bereich der Bohrung (30) angeordnet ist und unter einem Winkel (α) relativ zu einer Achse (Y-Y) der Bohrung (30) angeordnet ist, der kleiner als 90° ist, insbesondere sogar kleiner als 75° ist.

4. Vorkammer-Zündkerze nach Anspruch 3, **dadurch gekennzeichnet, dass** die Prallfläche (77a) an eine Bohrung (30) unmittelbar angrenzt.

5. Vorkammer-Zündkerze nach einem der Ansprüche 1 bis 2, **dadurch gekennzeichnet, dass** das Strukturelement (77) eine Abrisskante (77b) ist, die als scharfe Kante mit einem Kantenradius von weniger als 150µm ausgebildet ist.

6. Vorkammer-Zündkerze nach Anspruch einem der Ansprüche 3 oder 4 und zusätzlich nach Anspruch 5, **dadurch gekennzeichnet, dass** die Abrisskante (77b) die Prallfläche (77a) auf der von der Bohrung (30) abgewandten Seite der Prallfläche (77a) begrenzt.

7. Vorkammer-Zündkerze nach Anspruch 2, **dadurch gekennzeichnet, dass** das Strukturelement (77) ein konkaver Bereich (77d) ist, dessen Flächenkrümmungsradius nicht größer ist als der doppelte Radius der Mündung der Bohrung (30) auf der Außenfläche der Kappe (80).

8. Vorkammer-Zündkerze nach Anspruch 7, **dadurch gekennzeichnet, dass** der konkave Bereich (77d) an die Bohrung (30) unmittelbar angrenzt.

9. Vorkammer-Zündkerze nach einem der Ansprüche 1 bis 2, **dadurch gekennzeichnet, dass** das Strukturelement (77) ein konvexer Bereich (77c) ist, dessen Flächenkrümmungsradius nicht größer ist als der doppelte Radius der Mündung der Bohrung (30) auf der Außenfläche der Kappe.

10. Vorkammer-Zündkerze nach Anspruch 9, **dadurch gekennzeichnet, dass** der konvexe Bereich (77c) an die Bohrung (30) unmittelbar angrenzt.

11. Vorkammer-Zündkerze (1) nach einem der vorangehenden Ansprüche, **dadurch gekennzeichnet**, die Kappe (80) eine Außengeometrie ohne Drehsymmetrie aufweist.

12. Brennraum (200) mit einer Vorkammer-Zündkerze (1) nach einem der vorangehenden Ansprüche, wobei in dem Brennraum (200), beispielsweise während eines Kompressionstakts des Brennraums (200), im Bereich der Kappe (80) eine Strömungsrichtung (100) vorherrscht.

13. Brennraum nach Anspruch 12 mit einer Vorkammer-Zündkerze (1) nach Anspruch 3, 4 oder 6, **dadurch gekennzeichnet, dass** die Prallfläche (77a) stromabwärts der Bohrung (30) angeordnet ist.

14. Brennraum nach Anspruch 12 mit einer Vorkammer-Zündkerze (1) nach Anspruch 7 oder 8, **dadurch gekennzeichnet, dass** der konkave Bereich (77d) stromabwärts der Bohrung (30) angeordnet ist.

15. Brennraum nach Anspruch 12 mit einer Vorkammer-Zündkerze (1) nach Anspruch 9 oder 10, **dadurch gekennzeichnet, dass** der konvexe Bereiche (77c) stromaufwärts der Bohrung (30) angeordnet ist.

## Claims

1. Prechamber spark plug (1), having a housing (2) and having a cap (80) which is disposed at the combustion chamber end of the housing (2) and which conjointly with the housing (2) forms a prechamber (81) and has at least one bore (30), having an insulator (3) disposed within the housing (2), a central electrode (4) disposed within the insulator (3) and having a ground electrode (5), wherein the ground electrode (5) and the central electrode (4) conjointly form an ignition gap, **characterized in that** the external geometry of the cap (80) has at least one structural element (77) which facilitates the inflow of gases through the bore (30) into the prechamber (81) and/or the outflow of gases through the bore (30) from the prechamber (81), wherein the structural element (77) is one of the following structural elements or interacting combinations of these structural elements:
an impact surface (77a), an airflow breakaway edge (77b) and/or a convex region (77c).

2. Prechamber spark plug according to Claim 1, **characterized in that** the structural element (77) additionally has a concave region (77d).

3. Prechamber spark plug according to one of Claims 1 to 2, **characterized in that** the structural element (77) is an impact surface (77a), which is disposed in the region of the bore (30) and is disposed relative to an axis (Y-Y) of the bore (30) at an angle (α) of less than 90°, in particular even less than 75°.

4. Prechamber spark plug according to Claim 3, **characterized in that** the impact surface (77a) is directly adjacent to a bore (30).

5. Prechamber spark plug according to one of Claims 1 to 2, **characterized in that** the structural element (77) is an airflow breakaway edge (77b) which is formed as a sharp edge with an edge radius of less than 150 µm.

6. Prechamber spark plug according to one of Claims 3 or 4 and additionally according to Claim 5, **characterized in that** the airflow breakaway edge (77b) delimits the impact surface (77a) on the side of the impact surface (77a) that faces away from the bore (30).

7. Prechamber spark plug according to Claim 2, **characterized in that** the structural element (77) is a concave region (77d), the surface curvature radius of the latter not exceeding double the radius of the mouth of the bore (30) on the external surface of the cap (80).

8. Prechamber spark plug according to Claim 7, **characterized in that** the concave region (77d) is directly contiguous to the bore (30).

9. Prechamber spark plug according to one of Claims 1 to 2, **characterized in that** the structural element (77) is a convex region (77c), the surface curvature radius of the latter not exceeding double the radius of the mouth of the bore (30) on the external surface of the cap.

10. Prechamber spark plug according to Claim 9, **characterized in that** the convex region (77c) is directly contiguous to the bore (30).

11. Prechamber spark plug (1) according to one of the preceding claims, **characterized in that** the cap (80) has an external geometry without rotational symmetry.

12. Combustion chamber (200) with a prechamber spark plug (1) according to one of the preceding claims, wherein, for example during a compression stroke of the combustion chamber (200), a flow direction (100) is prevalent in the combustion chamber (200) in the region of the cap (80).

13. Combustion chamber according to Claim 12 with a prechamber spark plug (1) according to Claim 3, 4 or 6, **characterized in that** the impact surface (77a) is disposed downstream of the bore (30).

14. Combustion chamber according to Claim 12 with a prechamber spark plug (1) according to Claim 7 or 8, **characterized in that** the concave region (77d) is disposed downstream of the bore (30).

15. Combustion chamber according to Claim 12 with a prechamber spark plug (1) according to Claim 9 or 10, **characterized in that** the convex regions (77c) is disposed upstream of the bore (30).

## Revendications

1. Bougie d'allumage à préchambre (1), avec un boîtier (2) et avec un capuchon (80) qui est agencé à l'extrémité côté chambre de combustion du boîtier (2), qui réalisé conjointement avec le boîtier (2) une préchambre (81) et qui présente au moins un alésage (30), avec un isolateur (3) agencé à l'intérieur du boîtier (2), une électrode centrale (4) agencée à l'intérieur de l'isolateur (3) et avec une électrode de masse (5), l'électrode de masse (5) et l'électrode centrale (4) réalisant ensemble un intervalle d'allumage, **caractérisée en ce que** la géométrie extérieure du capuchon (80) présente au moins un élément structurel (77) qui facilite l'entrée de gaz dans la préchambre (81) à travers l'alésage (30) et/ou le sortie de gaz à travers l'alésage (30) hors de la préchambre (81), l'élément structurel (77) étant l'un des éléments structurels suivants ou des combinaisons coopérantes de ces éléments structurels :
une surface d'impact (77a), un bord de rupture (77b) et/ou une zone convexe (77c).

2. Bougie d'allumage à préchambre selon la revendication 1, **caractérisée en ce que** l'élément structurel (77) présente en outre une zone concave (77d).

3. Bougie d'allumage à préchambre selon l'une quelconque des revendications 1 à 2, **caractérisée en ce que** l'élément structurel (77) est une surface d'impact (77a) qui est agencée dans la zone de l'alésage (30) et qui est agencée selon un angle (α) par rapport à un axe (Y-Y) de l'alésage (30) qui est inférieur à 90°, notamment même inférieur à 75°.

4. Bougie d'allumage à préchambre selon la revendication 3, **caractérisée en ce que** la surface d'impact (77a) est directement adjacente à un alésage (30).

5. Bougie d'allumage à préchambre selon l'une quelconque des revendications 1 à 2, **caractérisée en ce que** l'élément structurel (77) est un bord de rupture (77b) qui est réalisé sous forme de bord tranchant avec un rayon de bord inférieur à 150 µm.

6. Bougie d'allumage à préchambre selon l'une quelconque des revendications 3 ou 4 et en outre selon la revendication 5, **caractérisée en ce que** le bord de rupture (77b) délimite la surface d'impact (77a) sur le côté de la surface d'impact (77a) détourné de l'alésage (30).

7. Bougie d'allumage à préchambre selon la revendication 2, **caractérisée en ce que** l'élément structurel (77) est une zone concave (77d) dont le rayon de courbure de surface n'est pas supérieur au double du rayon de l'embouchure de l'alésage (30) sur la surface extérieure du capuchon (80).

8. Bougie d'allumage à préchambre selon la revendication 7, **caractérisée en ce que** la zone concave (77d) est directement adjacente à l'alésage (30).

9. Bougie d'allumage à préchambre selon l'une quelconque des revendications 1 à 2, **caractérisée en ce que** l'élément structurel (77) est une zone convexe (77c) dont le rayon de courbure de surface n'est pas supérieur au double du rayon de l'embouchure de l'alésage (30) sur la surface extérieure du capuchon.

10. Bougie d'allumage à préchambre selon la revendication 9, **caractérisée en ce que** la zone convexe (77c) est directement adjacente à l'alésage (30).

11. Bougie d'allumage à préchambre (1) selon l'une quelconque des revendications précédentes, **caractérisée en ce que** le capuchon (80) présente une géométrie extérieure sans symétrie de révolution.

12. Chambre de combustion (200) avec une bougie d'allumage à préchambre (1) selon l'une quelconque des revendications précédentes, dans laquelle une direction d'écoulement (100) prévaut dans la chambre de combustion (200), par exemple pendant un cycle de compression de la chambre de combustion (200), dans la zone du capuchon (80).

13. Chambre de combustion selon la revendication 12 avec une bougie d'allumage à préchambre (1) selon les revendications 3, 4 ou 6, **caractérisée en ce que** la surface d'impact (77a) est agencée en aval de l'alésage (30).

14. Chambre de combustion selon la revendication 12 avec une bougie d'allumage à préchambre (1) selon la revendication 7 ou 8, **caractérisée en ce que** la zone concave (77d) est agencée en aval de l'alésage (30).

15. Chambre de combustion selon la revendication 12, avec une bougie d'allumage à préchambre (1) selon la revendication 9 ou 10, **caractérisée en ce que** la zone convexe (77c) est agencée en amont de l'alésage (30).
